# EUROPEAN PATENT APPLICATION

(11) **EP 4 835 781 A1**
(43) Date of publication of application: **04.11.2026**
(21) Application number: 24910289.8
(22) Date of filing: 31.10.2024
(51) Int. Cl.: G06Q 20/22

(54) **CALLING OF SMART CONTRACT**

(30) Priority: 29.12.2023 CN 202311869950
(71) Applicant: Ant Blockchain Technology (Shanghai) Co., Ltd., Shanghai 200010 (CN)
(72) Inventor: TAO, Youxian, Hangzhou, Zhejiang 310000 (CN)
(74) Representative: Fish & Richardson P.C.
(86) International application number: PCT/CN2024/128943
(87) International publication number: WO 2025/139351

(57) **Abstract**

This specification provides smart contract calling methods and apparatuses. The method includes: in response to an obtained blockchain transaction, determining a target contract that the blockchain transaction instructs to call, where the target contract maintains a remaining deductible gas fee previously pledged by an associated pledge account, and the remaining deductible gas fee has corresponding deduction permission description information; and when it is determined, based on the deduction permission description information, that an initiator account of the blockchain transaction has deduction permission, deducting at least a part of a contract gas fee needed for calling the target contract by the blockchain transaction from the remaining deductible gas fee of the target contract, and executing the call to the target contract by the blockchain transaction.

## Description

### TECHNICAL FIELD

This specification relates to the field of blockchain technologies, and in particular, relates to smart contract calling.

### BACKGROUND

A blockchain technology, also known as a distributed ledger technology, is a technology in which several computing devices participate in "bookkeeping" to jointly maintain a complete distributed database. The blockchain technology features decentralization and transparency. In addition, each computing device can participate in database recording, and data synchronization between the computing devices can be quickly implemented. Therefore, the blockchain technology has been widely used in many fields.

A blockchain implements related functions and data interaction in a form of transactions, while each object participates in the transactions by using a corresponding account. Accounts can be classified into the following types: externally owned accounts and contract accounts. An externally owned account is usually controlled by an individual or an institution, and is used to generate and initiate a transaction. A contract account corresponds to a smart contract in the blockchain. The smart contract is a contract that can be triggered by a transaction in the blockchain. The smart contract is defined in a form of code.

A gas mechanism exists in some implementations of the blockchain, and in the mechanism, an initiator account of a transaction needs to spend a corresponding gas fee when the transaction calls a smart contract, thereby increasing a threshold for calling the smart contract and deterring arbitrary calls to the smart contract.

### SUMMARY

This specification provides smart contract calling methods and apparatuses.

According to a first aspect of one or more implementations of this specification, a smart contract calling method is proposed, and the method includes: in response to an obtained blockchain transaction, determining a target contract that the blockchain transaction instructs to call, where the target contract maintains a remaining deductible gas fee previously pledged by an associated pledge account, and the remaining deductible gas fee has corresponding deduction permission description information; and when it is determined, based on the deduction permission description information, that an initiator account of the blockchain transaction has deduction permission, deducting at least a part of a contract gas fee needed for calling the target contract by the blockchain transaction from the remaining deductible gas fee of the target contract, and executing the call to the target contract by the blockchain transaction.

According to a second aspect of one or more implementations of this specification, a smart contract calling apparatus is proposed, and the apparatus includes: a determining unit, configured to: in response to an obtained blockchain transaction, determine a target contract that the blockchain transaction instructs to call, where the target contract maintains a remaining deductible gas fee previously pledged by an associated pledge account, and the remaining deductible gas fee has corresponding deduction permission description information; and a deduction unit, configured to: when it is determined, based on the deduction permission description information, that an initiator account of the blockchain transaction has deduction permission, deduct at least a part of a contract gas fee needed for calling the target contract by the blockchain transaction from the remaining deductible gas fee of the target contract, and execute the call to the target contract by the blockchain transaction.

According to a third aspect of one or more implementations of this specification, an electronic device is proposed, and includes a processor and a storage configured to store instructions executable by the processor. The processor runs the executable instructions to implement the method according to the first aspect.

According to a fourth aspect of one or more implementations of this specification, a computer-readable storage medium is proposed, and stores computer instructions. When the instructions are executed by a processor, the steps of the method according to the first aspect are implemented.

In implementations of this specification, the contract gas fee is deducted from the remaining deductible gas fee held by the target contract, instead of from an external account, e.g., an external deduction account. Because the remaining deductible gas fee is previously pledged by the associated pledge account in the target contract and held by the target contract, the target contract can implement contract gas fee deduction without needing to access any external deduction account. On the one hand, because there is no need to access any external deduction account and there is no need to determine whether a balance of the external deduction account satisfies the contract gas fee, deduction steps are simplified, and deduction efficiency is improved, thereby improving smart contract calling efficiency. That is, this localized deduction verifies user permissions while bypassing external account lookups, thereby conserving physical computational resources and improving blockchain transaction efficiency. On the other hand, deduction permission description information corresponding to the remaining deductible gas fee is used to verify deduction permission of an initiator account of a blockchain transaction, so that an account without deduction permission cannot call the target contract through deduction, thereby ensuring contract deduction security.

### BRIEF DESCRIPTION OF DRAWINGS

To describe the technical solutions in the implementations of this specification more clearly, the following briefly describes the accompanying drawings needed for describing the implementations. Clearly, the accompanying drawings in the following description are merely some implementations of this specification, and a person of ordinary skill in the art can still derive other drawings from these accompanying drawings without creative efforts.
FIG. 1 is a diagram illustrating a blockchain system, according to one or more example implementations;
FIG. 2 is a diagram illustrating gas fee deduction in a related technology, according to one or more example implementations;
FIG. 3 is a flowchart illustrating a smart contract calling method, according to one or more example implementations;
FIG. 4 is a flowchart illustrating another smart contract calling method, according to one or more example implementations;
FIG. 5 is a diagram illustrating a structure of a device, according to one or more example implementations; and
FIG. 6 is a block diagram illustrating a smart contract calling apparatus, according to one or more example implementations.

### DESCRIPTION OF IMPLEMENTATIONS

To make a person skilled in the art better understand the technical solutions in this specification, the following clearly and comprehensively describes the technical solutions in the implementations of this specification with reference to the accompanying drawings in the implementations of this specification. Clearly, the described implementations are merely some but not all of the implementations of this specification. All other implementations obtained by a person of ordinary skill in the art based on the some implementations of this specification without creative efforts shall fall within the protection scope of this specification.

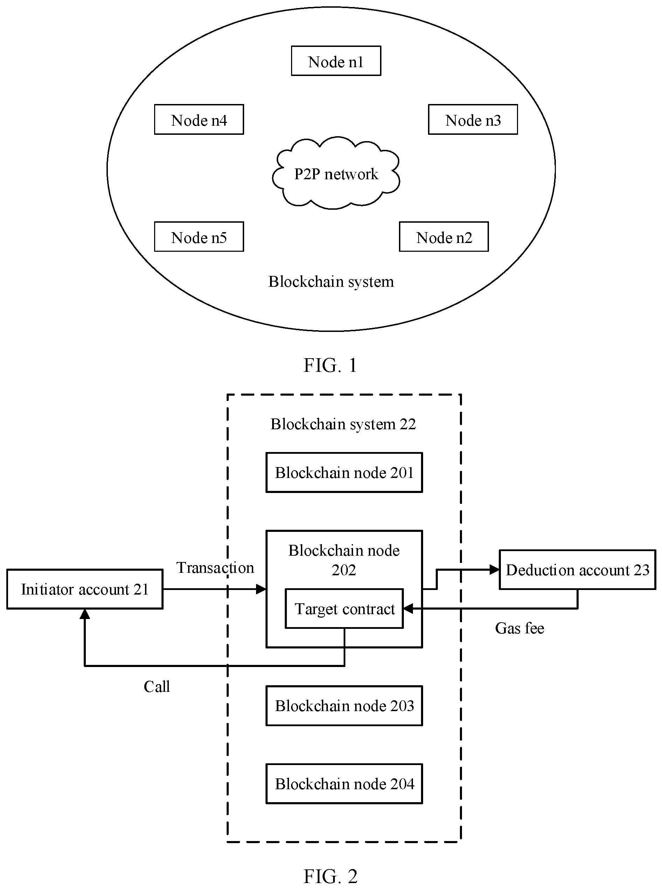

FIG. 1 is a diagram illustrating a blockchain system, according to one or more example implementations. As shown in FIG. 1, the blockchain system is a distributed network established by using a plurality of nodes, and includes a communication connection implemented at an application layer between any two nodes through a peer-to-peer (P2P) network. For example, any two nodes of node n1 to node n5 included in the blockchain system can implement a communication connection at the application layer through the P2P network. A decentralized (or multi-centralized) distributed ledger constructed by the blockchain system using a chain block structure is stored on each node (or most nodes, such as consensus nodes) in the distributed blockchain network. Therefore, the blockchain system needs to address the issue of consistency and correctness of data in respective ledgers on a plurality of decentralized (or multi-centralized) nodes. In view of this, each node of the blockchain system runs a blockchain program. Under the design of certain fault tolerance needs, a consensus mechanism is used to ensure that all honest nodes have the same transaction, thereby ensuring that all the honest nodes have consistent execution results for the same transaction, packaging the transaction into blocks and updating a world state based on the execution results of the same transaction. At present, mainstream consensus mechanisms include but are not limited to a Proof of Work (PoW), a Proof of Stake (PoS), a Practical Byzantine Fault Tolerance (PBFT) algorithm, a honey badger Byzantine fault tolerance (HoneyBadgerBFT) algorithm, etc.

Accounts in the blockchain system are usually divided into two types: user accounts/externally owned accounts and contract accounts. The contract account is configured to store contract code of a smart contract and values of related states, and can usually only be activated and called by an externally owned account. The design of externally owned accounts and contract accounts is actually a mapping of account address to account states. Account states can usually include but are not limited to fields such as Nonce, Balance, StorageRoot, and CodeHash, where Nonce and Balance exist in both externally owned accounts and contract accounts, while CodeHash and StorageRoot attributes are usually valid only in contract accounts. In the above-mentioned fields, Nonce represents a counter, and its value, for an externally owned account, represents a quantity of transactions sent from an account address, while for a contract account, it represents a quantity of smart contracts created by the account. A value of Balance represents an amount of digital resources owned by a corresponding externally owned account. StorageRoot represents a hash of a root node of a Merkle Patricia tree (MPT). The MPT is used to organize the storage of state variables of a contract account. CodeHash represents a hash value of the contract code, and for a contract account, it is the code that a smart contract is hashed and stored, while for an externally owned account, it can be an empty string or an all-0 string because the smart contract is not included.

The MPT is a tree structure that combines a Merkle tree and a Patricia tree (compact prefix tree, a more space-saving trie tree). Regarding the Merkle tree, a Merkle tree algorithm calculates a hash value for each transaction, and then connects every two transactions and calculates a hash, until the top Merkle root. An improved MPT tree is used in Ethereum, for example, a structure of a 16-ary tree, also commonly referred to as an MPT tree for short. The data structure of the Ethereum MPT tree includes a state trie.

The state trie includes a key-value pair of the storage content corresponding to each account in Ethereum. The "key" in the state trie can be an identifier with a length of 160 bits (such as an address of an Ethereum account). This account address is distributed in the storage from a root node to a leaf node of the state trie. The "value" in the state trie is generated by encoding information about the Ethereum account (using a Recursive-Length Prefix encoding (RLP) method). As described above, for externally owned accounts, the values can include Nonce and Balance, while for contract accounts, the values can include Nonce, Balance, CodeHash, StorageRoot, etc.

The contract account is used to store a state related to a smart contract. After a smart contract is deployed in a blockchain system, a corresponding contract account is allocated. This contract account typically has some states, and these states are defined by state variables in the smart contract, and generate new state values when the smart contract is created and executed. The smart contract in this specification is generally a contract that is digitally defined in a blockchain environment and whose terms can be automatically executed. Once a certain event triggers a term in a contract (an execution condition is satisfied), code can be executed automatically.

A gas mechanism exists in some implementations of the blockchain, and in the mechanism, an initiator account of a transaction needs to spend a corresponding gas fee when the transaction calls a smart contract, thereby increasing a threshold for calling the smart contract and deterring arbitrary calls to the smart contract. However, the gas mechanism requires a user to spend a gas fee each time the user interacts with a contract (the contract mentioned in this specification is a smart contract), each operation has costs, and the user needs to weigh whether paying the gas fee is worthwhile before the transaction.

In a related technology, a gas fee deduction method is proposed, and signatures of an initiator account and a deduction account are added to a transaction calling a contract, so that a contract gas fee calling the contract is deducted by the deduction account. As shown in FIG. 2, a blockchain system 22 has multiple blockchain nodes, including blockchain nodes 201 to 204. A target contract is deployed on the blockchain node 202, an initiator account 21 can send a transaction calling the target contract to the blockchain node 202, and the transaction includes signatures of the initiator account 21 and a deduction account 23 (a signing method can be negotiated in advance by the initiator account 21 and the deduction account 23). The blockchain node 202 can query, based on execution logic of the target contract, whether a balance of the deduction account 23 satisfies a contract gas fee of the target contract, and the deduction account 23 transfers the contract gas fee to the target contract to complete gas fee deduction if yes. The blockchain node 202 allows the initiator account 21 to call the target contract after the deduction is completed.

In the above-mentioned process, the blockchain node 202 needs to additionally verify whether the balance of the deduction account satisfies the contract gas fee. In addition, in a web3 scenario, the transaction is sent by the initiator account to the blockchain. In this case, a hash value of the transaction has been determined, the signature of the deduction party needs to be added to modify content of the transaction, and therefore the hash value needs to be changed, thereby improving operation complexity.

To resolve deficiencies in the related technology, this specification provides a smart contract calling method.

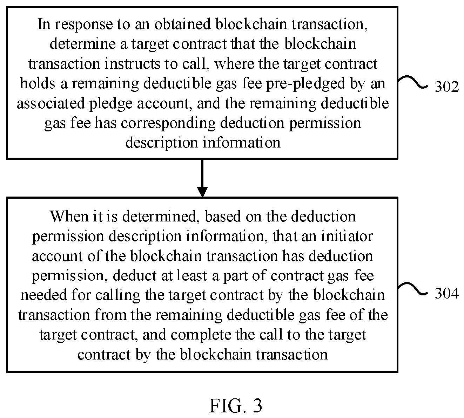

FIG. 3 is a flowchart illustrating a smart contract calling method, according to one or more example implementations. As shown in FIG. 3, the method includes at least step 302 to step 304 below.

Step 302: In response to an obtained blockchain transaction, determine a target contract that the blockchain transaction instructs to call, where the target contract maintains a remaining deductible gas fee previously pledged by an associated pledge account, and the remaining deductible gas fee has corresponding deduction permission description information.

The method can be executed by any blockchain node on a blockchain. The obtained blockchain transaction can be directly uploaded to the blockchain node by an initiator account of the blockchain transaction, or can be forwarded to any blockchain node by the initiator account through another blockchain node. The blockchain transaction in this specification can be implemented by using a smart contract to implement complex processing logic, and the smart contract used by the blockchain transaction is the target contract that the blockchain transaction instructs to call. A quantity of contracts called by the same blockchain transaction is not limited, there can be one contract or multiple contracts, and each contract called by the blockchain transaction can be the target contract.

The blockchain node can determine, during transaction execution, the target contract that the blockchain transaction instructs to call. Specifically, the target contract is determined based on a contract address included in a To field of the transaction.

The blockchain node can alternatively determine the target contract by pre-executing the transaction before executing the transaction. Specifically, the blockchain node can pre-execute the blockchain transaction to obtain a pre-execution read-write set of the blockchain transaction. The pre-execution read-write set can record a contract address of a contract related to a target transaction, and the target transaction can determine, for the recorded contract address, the target contract that the blockchain transaction instructs to call. In the one or more implementations, the smart contract involved in the blockchain transaction is determined by using the pre-execution read-write set of the blockchain transaction, and efficiency of determining the target contract through pre-execution is higher because a resource and a time consumed by pre-execution are less than a resource and a time consumed by real transaction execution.

The target contract maintains the remaining deductible gas fee previously pledged by the associated pledge account, and the remaining deductible gas fee has the corresponding deduction permission description information. The associated pledge account can be the initiator account of the blockchain transaction or another account different from the initiator account. Certainly, there can be one or more associated pledge accounts, and both the initiator account of the blockchain transaction and the another account different from the initiator account can be used as associated pledge accounts when there are multiple associated pledge accounts. The remaining deductible gas fee can be pledged by one or more associated pledge accounts in the target contract through a transaction. This part of content is described in detail below. Details are omitted here for simplicity.

The remaining deductible gas fee has the corresponding permission description information. Specifically, the deduction permission description information includes at least one of an account set with deduction permission, an account set without deduction permission, feature description information of an account with deduction permission, and feature description information of an account without deduction permission. The feature description information can be an account address of a corresponding account, an account name, public key information uploaded by an account, etc. Specific content of the feature description information is not limited in this specification.

In one or more implementations, the deduction permission description information and the remaining deductible gas fee are maintained in a contract account of the target contract or an associated party account recorded in the contract account of the target contract.

The target contract can obviate the need to access to another account and independently complete deduction permission determining when the deduction permission description information and the remaining deductible gas fee are maintained in the contract account of the target contract, thereby saving an account access time, improving gas fee deduction efficiency, and improving transaction execution efficiency.

The target contract can maintain account information of the associated party account when the deduction permission description information and the remaining deductible gas fee are maintained in the associated party account recorded in the contract account of the target contract. If the blockchain transaction calling the target contract is obtained, the target contract can access the associated party account based on the account information maintained by the target contract, to determine the remaining deductible gas fee and the deduction permission description information corresponding to the target contract to determine whether the blockchain transaction has deduction permission. In this case, the target contract stores the deduction permission description information and the remaining deductible gas fee in the associated party account, thereby saving storage space of the target contract.

Further, the associated party account includes at least one of a contract deployer and a contract manager. The contract manager can be a contract deployer or another user with management permission different from the contract deployer, for example, can be a system administrator of a blockchain system or related department personnel with management permission. Compared with other accounts, the contract deployer and the contract manager of the target contract have small information leakage or tampering risks. The contract deployer or the contract manager of the target contract maintains the deduction permission description information and the remaining deductible gas fee, to ensure information security to the maximum extent.

Further, the deduction permission description information is maintained in a storage field of the contract account of the target contract and the remaining deductible gas fee are maintained in an account balance field and/or the storage field of the contract account of the target contract when the deduction permission description information and the remaining deductible gas fee are maintained in the contract account of the target contract; or the deduction permission description information and the remaining deductible gas fee are maintained in a storage field of the associated party account when the deduction permission description information and the remaining deductible gas fee are maintained in the associated party account.

As shown in Table 1, account states of the contract account generally include a "Balance" field, a "Nonce" field, a "CodeHash" field, and a "StorageRoot" field. The "Balance" field corresponds to the above-mentioned balance field, and the "StorageRoot" field corresponds to the above-mentioned storage field. As described above, StorageRoot represents a hash of a root node of an MPT tree. The MPT tree is used to organize storage of state variables of the contract account. The remaining deductible gas fee and/or the deduction permission description information can be stored in a certain node of the MPT tree when the remaining deductible gas fee and/or the deduction permission description information are/is maintained in the storage field.

**Table 1**

| |
|---|
| Balance |
| Nonce |
| CodeHash |
| StorageRoot |

When the deduction permission description information and the remaining deductible gas fee are maintained in the contract account of the target contract, the target contract can directly determine an amount of the remaining deductible gas fee based on content recorded in the balance field of the target contract, or can determine, based on the deduction permission description information stored in the storage field, whether the initiator account has deduction permission.

When the deduction permission description information and the remaining deductible gas fee are maintained in the associated party account, the target contract can request the deduction permission description information and the remaining deductible gas fee from the associated party account; or the target contract can send a permission determining request including information about the initiator account to the associated party account, and the associated party account determines deduction permission of the initiator account and receives a determining result fed back by the associated party account.

Step 304: When it is determined, based on the deduction permission description information, that the initiator account of the blockchain transaction has deduction permission, deduct at least a part of a contract gas fee needed for calling the target contract by the blockchain transaction from the remaining deductible gas fee of the target contract, and execute the call to the target contract by the blockchain transaction.

The contract gas fee can be a gas fee needed for calling the target contract, and at least the part of contract gas fee can be an entire contract gas fee or a part of contract gas fee.

Specifically, the deducting at least the part of contract gas fee needed for calling the target contract by the blockchain transaction from the remaining deductible gas fee of the target contract includes: deducting an entire contract gas fee needed for calling the target contract by the blockchain transaction from the remaining deductible gas fee of the target contract; or deducting a part of contract gas fee needed for calling the target contract by the blockchain transaction from the remaining deductible gas fee of the target contract, and deducting a remaining part of contract gas fee from an account balance of the initiator account of the blockchain transaction.

Further, the deducting at least the part of contract gas fee needed for calling the target contract by the blockchain transaction from the remaining deductible gas fee of the target contract includes: when the remaining deductible gas fee of the target contract is less than the contract gas fee, deducting the remaining deductible gas fee of the target contract, and deducting the remaining part of contract gas fee from the account balance of the initiator account; or deducting the contract gas fee from the remaining deductible gas fee of the target contract and the account balance of the initiator account by a predefined ratio.

Two parts of contract gas fee can be respectively deducted from the remaining deductible gas fee and the account balance of the initiator account by the predetermined ratio. For example, the predetermined deduction ratio can be 1:1, and 5 can be deducted from the remaining deductible gas fee and 5 can be deducted from the account balance of the initiator account if the contract gas fee is 10. Certainly, the gas fee can alternatively be deducted without a ratio. The contract gas fee can be preferentially deducted from the remaining deductible gas fee, and when the remaining deductible gas fee is insufficient, the remaining deductible gas fee can be first fully deducted or deducted until a predetermined threshold (for example, 5% of the original remaining deductible gas fee or a fixed gas amount of 10) is reached, and then the remaining part of contract gas fee is deducted from the account balance of the initiator account. This specification does not limit a specific deduction method.

In one or more implementations, the contract gas fee is not deducted from the deduction account but from the remaining deductible gas fee held by the target contract. Because the remaining deductible gas fee is previously pledged by the associated pledge account in the target contract and held by the target contract, the target contract can implement contract gas fee deduction without needing to access any deduction account. On the one hand, because there is no need to access any deduction account and there is no need to determine whether a balance of the deduction account satisfies the contract gas fee, deduction steps are simplified, and deduction efficiency is improved, thereby improving smart contract calling efficiency. On the other hand, deduction permission description information corresponding to the remaining deductible gas fee is used to verify deduction permission of an initiator account of a blockchain transaction, so that an account without deduction permission cannot call the target contract through deduction, thereby ensuring contract deduction security.

The blockchain node can be understood as a logical whole of a combination of software and hardware. The software includes a blockchain instance, and the blockchain instance runs on a certain device and implements a corresponding function by using code (i.e., chain code) included in the blockchain instance. The hardware can be understood as a device that deploys and runs the blockchain instance or a hardware resource that is actually occupied on the device.

In a related technology, transaction execution logic defined in the chain code is: when a certain transaction is executed, a gas fee is deducted from an initiator of the transaction, that is, the needed gas fee is deducted from an account of the initiator of the transaction. In this specification, underlying optimization is performed on the chain code. Based on optimized chain code, during transaction execution, the blockchain node does not directly deduct the gas fee from the initiator account of the transaction, but can deduct the gas fee from the contract account of the smart contract called by the transaction.

In one or more implementations, the gas fee deduction logic of the chain code can be changed to: deducting, in any case during transaction execution, the gas fee from the contract account of the smart contract called by the transaction. In other implementations, the gas fee deduction logic of the chain code can be changed to: determining a current situation to determine whether the gas fee is deducted from the initiator account of the transaction, the contract account of the smart contract called by the transaction, or even both accounts. Certainly, whether the initiator account of the transaction has deduction permission further needs to be determined if the contract account is determined as a deduction object, which is described in detail below. Details are omitted here for simplicity.

Specifically, the blockchain node can determine the gas fee deduction object based on a transaction identifier of the transaction and/or a contract identifier of the smart contract.

In a case, the blockchain transaction includes a transaction identifier; and a prerequisite for deducting at least the part of contract gas fee from the remaining deductible gas fee of the target contract includes: the transaction identifier indicates that the blockchain transaction supports gas fee deduction. The blockchain node can determine, based on the transaction identifier of the blockchain transaction, whether the blockchain transaction supports gas fee deduction. The transaction identifier can be a certain field included in the blockchain transaction, the field includes a first field value and a second field value, the first field value limits that the blockchain transaction supports gas fee deduction, and the second field value limits that the blockchain transaction does not support gas fee deduction. The blockchain node can identify a field value of the field included in the blockchain transaction to determine the gas fee deduction object during transaction execution. The deduction object is the contract account of the smart contract called by the transaction when the field is the first field value. The deduction object is the initiator account of the transaction when the field is the second field value.

In another case, the target contract has a corresponding contract identifier; and a prerequisite for deducting at least the part of contract gas fee from the remaining deductible gas fee of the target contract includes: the contract identifier indicates that the target contract supports gas fee deduction. The blockchain node can determine, based on the contract identifier of the smart contract, whether the smart contract supports gas fee deduction. The contract identifier can be a certain field that is set in the contract account or contract code, and whether the smart contract supports gas fee deduction can be determined based on a field value of the field. For example, the field includes a third field value and a fourth field value, the third field value limits that the smart contract supports gas fee deduction, and the fourth field value limits that the smart contract does not support gas fee deduction. If the contract identifier of the smart contract indicates that the smart contract does not support gas fee deduction, the gas fee cannot be deducted from the remaining deductible gas fee even if the smart contract includes the remaining deductible gas fee. In this case, during transaction execution, the blockchain node can identify the smart contract called by the transaction, and determine a deduction object based on the value of the contract identifier in the contract account or the contract code of the smart contract: if the value is the third field value, the deduction object is the contract account of the smart contract, and if the value is the fourth field value, the deduction object is the initiator account of the transaction.

Certainly, the above-mentioned two cases can be combined, that is, the transaction includes a transaction identifier, and the smart contract also has a corresponding contract identifier. A prerequisite for deducting at least the part of contract gas fee from the remaining deductible gas fee of the target contract includes: the transaction identifier indicates that the blockchain transaction supports gas fee deduction, and the contract identifier indicates that the target contract supports gas fee deduction. For example, when executing a certain transaction, the blockchain node first checks a value of a transaction identifier; and can directly determine that a deduction object is an initiator account of the transaction if the transaction identifier is a second field; or further checks a value of the contract identifier if the transaction identifier is a first field value: a deduction object is the contract account of the smart contract if the contract identifier is a third field value, or a deduction object is an initiator account of the transaction if the contract identifier is a fourth field value. In other words, the gas fee deduction object can be determined as the contract account of the smart contract if both the blockchain transaction and the smart contract support gas fee deduction, or the gas fee deduction object is determined as the initiator of the blockchain transaction if the transaction identifier or the contract identifier does not support gas fee deduction.

In the one or more implementations, the chain code of the blockchain is optimized, so that the blockchain node can determine the gas fee deduction object based on the transaction identifier of the blockchain transaction and/or the contract identifier of the smart contract called by the transaction, thereby overcoming the limitation of restricting the deduction object to the transaction initiator, and implementing deduction of the gas fee from the contract account of the smart contract.

In one or more implementations, the target contract has corresponding multiple groups of remaining deductible gas fees and deduction permission description information corresponding to each group of remaining deductible gas fees, and the deducting at least the part of contract gas fee needed for calling the target contract by the blockchain transaction from the remaining deductible gas fee of the target contract includes: deducting at least the part of contract gas fee from at least one group of the multiple groups of remaining deductible gas fees.

As shown in Table 2, remaining deductible gas fees can be grouped based on associated pledge accounts, and deduction permission description information corresponding to different groups of remaining deductible gas fees can be the same or can be different. For example, an associated pledge account 0x1 pre-pledges a gas fee 100, deduction permission description information corresponding to the gas fee is account addresses "0x1, 0x5, 0x6" of accounts with deduction permission, and the associated pledge account can also have deduction permission for the gas fee. In addition, the other two groups of gas fees recorded in Table 2 are 200 previously pledged by an associated pledge account 0x2 and 1000 previously pledged by an associated pledge account 0x3, deduction permission description information corresponding to the gas fee 200 is "0x2, 0x5", and deduction permission description information corresponding to the gas fee 1000 is "0x7, 0x8".

**Table 2**

| Associated pledge account | Remaining deductible gas fee | Deduction permission description information |
|---|---|---|
| 0x1 | 100 | 0x1, 0x5, and 0x6 |
| 0x2 | 200 | 0x2 and 0x5 |
| 0x3 | 1000 | 0x7 and 0x8 |

Deduction permission description information can be limited by an associated pledge account, that is, the associated pledge account can limit an account with deduction permission on a gas fee pledged by the associated pledge account. Specifically, an associated pledge account can send corresponding deduction permission description information to the target contract while pledging a gas fee.

In the one or more implementations, the remaining deductible gas fees are grouped based on the associated pledge accounts, so that the associated pledge account can limit the account with deduction permission on a gas fee pledged by the associated pledge account.

Certainly, remaining deductible gas fees can alternatively be grouped in another method, for example, based on geographic regions of associated pledge accounts (for example, associated pledge accounts in the southern region are grouped together), or based on a quantity of gas fees previously pledged by associated pledge accounts (for example, gas fees less than 100 are grouped together), which is not limited in this specification.

Further, the deducting at least the part of contract gas fee from the at least two groups of remaining deductible gas fees includes: determining each group of remaining deductible gas fees for which the initiator account of the blockchain transaction has deduction permission; and selecting the at least two groups of remaining deductible gas fees and deducting at least the part of contract gas fee from the at least two groups of remaining deductible gas fees when each group of remaining deductible gas fees or a fee allowed to be used by the initiator account of the blockchain transaction in each group of remaining deductible gas fees is less than at least the part of contract gas fee.

As shown in Table 2, the account with the account address "0x5" has deduction permission on two groups of remaining deductible gas fees. If the contract gas fee is 300, and the amount is higher than any group of remaining deductible gas fees of the accounts with deduction permission, the target contract can deduct the contract gas fee from the two groups of remaining deductible gas fees, that is, deduct 100 from the first group of remaining deductible gas fees and deduct 200 from the second group of remaining deductible gas fees.

In the one or more implementations, although the remaining deductible gas fees are grouped into multiple groups, the contract gas fee is not to be limited to being deducted from the same group of remaining deductible gas fees, and the contract gas fee is deducted from the multiple groups of remaining deductible gas fees with deduction permission, thereby implementing flexible gas fee deduction.

In one or more implementations, the method further includes: determining whether the target contract has a corresponding deduction permission identifier; and when it is determined that the target contract has the deduction permission identifier, determining, based on the deduction permission description information, whether the initiator account of the blockchain transaction has deduction permission.

The deduction permission identifier can be an additional field maintained by the target contract, and the field records whether the target contract allows deduction. The additional field can be the fifth field in the contract state other than the above-mentioned four fields.

The deduction permission identifier can also be maintained in the MPT tree corresponding to the "StorageRoot" field of the target contract, for example, can be a predetermined parameter, and the blockchain node can determine, based on a value of the parameter, whether the target contract allows deduction.

If the target contract has the deduction permission identifier, the blockchain node can further determine whether the initiator account has deduction permission. If the target contract does not have the deduction permission identifier, the blockchain node can notify the initiator account of a transaction failure, or the blockchain node can deduct the contract gas fee from the account balance of the initiator account.

In the one or more implementations, the deduction permission identifier is used to distinguish whether the target contract allows deduction, thereby precluding use of a deduction mechanism for a contract that does not allow deduction.

In one or more implementations, the method further includes: in response to a gas fee pledge transaction for the target contract, determining an associated pledge account and a pledged gas fee that are described in the gas fee pledge transaction; and deducting the pledged gas fee from an account balance of the determined associated pledge account, and adding the pledged gas fee to the remaining deductible gas fee of the target contract.

The gas fee pledge transaction is essentially a simple transfer transaction, that is, the associated pledge account transfers an amount to the contract account of the target contract, and the transferred amount is a pledged gas fee. Specifically, the gas fee pledge transaction can include a special field used to describe a transaction type. After receiving the transaction, the blockchain node can parse the received transaction, and can deduct the pledged gas fee from the account balance of the initiator account of the transaction and add the pledged gas fee to the remaining deductible gas fee of the target contract if the transaction type is the gas fee pledge transaction.

As described above, the remaining deductible gas fees can be grouped based on the associated pledge accounts, and the associated pledge accounts can be limited by the deduction permission description information corresponding to the gas fees previously pledged by the associated pledge accounts. The gas fee pledge transaction sent by the associated pledge account can include the corresponding deduction permission description information. The target contract can perform associated maintenance on the gas fee and the deduction permission description information.

In the one or more implementations, through the gas fee pledge transaction, the associated pledge account can pre-pledge the pledged gas fee to the target contract, so that the target contract can use the pledged gas fee as the remaining deductible gas fee to implement the deduction mechanism.

In one or more implementations, the method further includes: allocating an incentive resource to the associated pledge account in response to the contract gas fee deducted from the remaining deductible gas fee based on the blockchain transaction.

To encourage an account to actively pledge a gas fee to a contract, the blockchain node can allocate the incentive resource to the associated pledge account after the target contract is called. Specifically, incentive resources can be allocated based on a ratio of pledged gas fees pledged by associated pledge accounts. For example, if there are two associated pledge accounts, the first pledged gas fee is 100, and the second pledged gas fee is 200, a ratio of incentive resources obtained by the two associated pledge accounts is 1:2. Certainly, the incentive resource can alternatively be allocated according to another allocation rule, for example, allocated in average, or the incentive resource is allocated to only an associated pledge account having the highest pledged gas fee, etc. A specific allocation rule is not limited in this specification.

The incentive resource can be a gas fee, or can be another on-chain resource (such as points, data, or permission associated with the target contract), or can be a certificate of holding an off-chain resource (such as a property certificate, a mobile phone voucher, etc.), etc. When the incentive resource is online points, the associated pledge account can redeem the corresponding rewards offline based on the points.

In the one or more implementations, for the consideration that the incentive account actively pledges the gas fee to the contract, an incentive mechanism is set up to allocate a corresponding incentive resource to the associated pledge account after the target contract is called, thereby encouraging the account to actively pledge the gas fee.

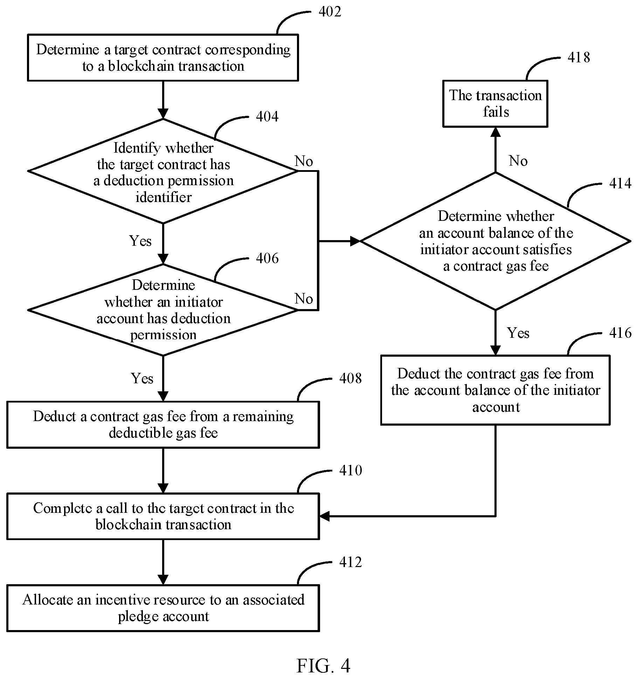

The following comprehensively describes the above-mentioned implementations with reference to FIG. 4. FIG. 4 is a flowchart illustrating another smart contract calling method, according to one or more example implementations. As shown in FIG. 4, the method includes at least step 402 to step 418 below.

Step 402: Determine a target contract corresponding to a blockchain transaction. A blockchain node obtains the blockchain transaction, obtains a pre-execution read-write set of the blockchain transaction by pre-executing the blockchain transaction, determines, based on the pre-execution read-write set, a contract that needs to be called in the blockchain transaction, and uses the determined contract as the target contract.

Step 404: Identify whether the target contract has a deduction permission identifier. It is determined that the target contract has a field recording whether the target contract allows deduction. If the field records that the target contract allows deduction, the target contract has the deduction permission identifier, and step 406 is performed: determine whether an initiator account has deduction permission. The blockchain node determines whether deduction permission description information held by the target contract includes an account address of the initiator account, and if yes, it indicates that the initiator account has deduction permission, and step 408 is performed: deduct a contract gas fee from a remaining deductible gas fee. Step 410: Complete a call to the target contract in the blockchain transaction. Step 412: Allocate an incentive resource to an associated pledge account. The blockchain node can allocate the incentive resource based on a ratio of a pledged gas fee pledged by the associated pledge account.

In step 404, if the field records that the target contract does not allow deduction, it indicates that the target contract does not have the deduction permission identifier, and step 414 is performed. In step 406, if the deduction permission description information does not include the account address of the initiator account, it indicates that the initiator account does not have deduction permission, and likewise, step 414 is performed.

Step 414: Determine whether an account balance of the initiator account satisfies the contract gas fee. A condition for satisfying the contract gas fee can be that the account balance of the initiator account is greater than the contract gas fee of the target contract, or the account balance of the initiator account is greater than a predetermined threshold after the contract gas fee is deducted, or the contract gas fee of the target contract is less than a predetermined percentage of the account balance of the initiator account, which is not limited in this specification. If the account balance of the initiator account satisfies the contract gas fee, step 416 is performed: deduct the contract gas fee from the account balance of the initiator account; and then step 410 is performed. If the account balance of the initiator account does not satisfy the contract gas fee, step 418 is performed: the transaction fails, and the blockchain node can notify the initiator account of the transaction failure and provide a notification indicating the failure cause.

In one or more implementations, the contract gas fee is not deducted from the deduction account but from the remaining deductible gas fee held by the target contract. Because the remaining deductible gas fee is previously pledged by the associated pledge account in the target contract and held by the target contract, the target contract can implement contract gas fee deduction without needing to access any deduction account. On the one hand, because there is no need to access any deduction account and there is no need to determine whether a balance of the deduction account satisfies the contract gas fee, deduction steps are simplified, and deduction efficiency is improved. On the other hand, deduction permission description information corresponding to the remaining deductible gas fee is used to verify deduction permission of an initiator account of a blockchain transaction, so that an account without deduction permission cannot call the target contract through deduction, thereby ensuring contract deduction security.

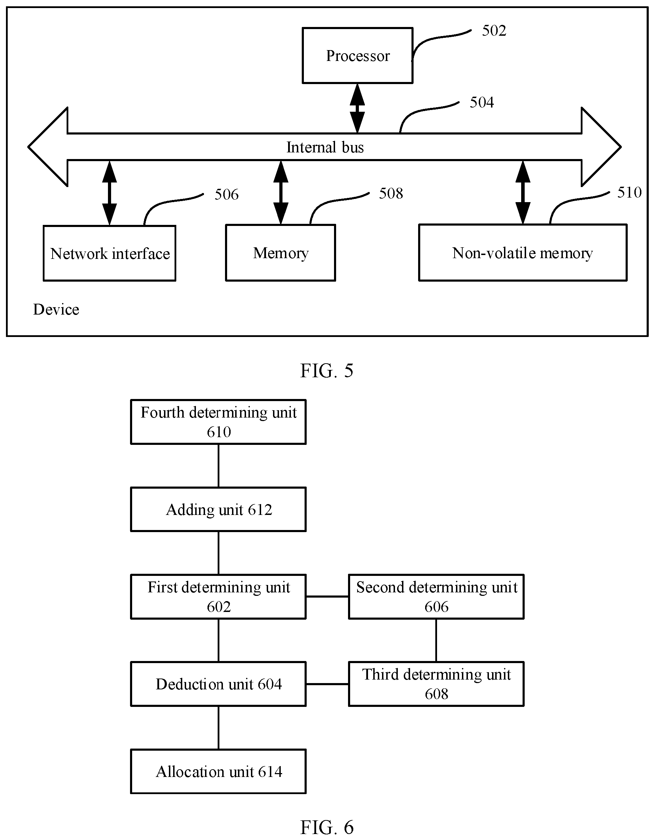

FIG. 5 is a diagram illustrating a structure of a device, according to one or more example implementations. As shown in FIG. 5, in terms of hardware, the device includes a processor 502, an internal bus 504, a network interface 506, a memory 508, and a non-volatile memory 510, and certainly may further include hardware needed for another function. One or more implementations of this specification can be implemented in a software-based way. For example, the processor 502 reads a corresponding computer program from the non-volatile memory 510 into the memory 508, and then runs the computer program. Certainly, in addition to a software implementation, one or more implementations of this specification do not exclude another implementation, for example, a logic device or a combination of hardware and software. That is, an execution body of the following processing procedure is not limited to each logical unit, and can be hardware or a logic device.

As shown in FIG. 6, FIG. 6 is a block diagram illustrating a smart contract calling apparatus, according to one or more example implementations. The apparatus can be used in the device shown in FIG. 5 to implement the technical solutions of this specification. The apparatus includes: a first determining unit 602, configured to: in response to an obtained blockchain transaction, determine a target contract that the blockchain transaction instructs to call, where the target contract maintains a remaining deductible gas fee previously pledged by an associated pledge account, and the remaining deductible gas fee has corresponding deduction permission description information; and a deduction unit 604, configured to: when it is determined, based on the deduction permission description information, that an initiator account of the blockchain transaction has deduction permission, deduct at least a part of a contract gas fee needed for calling the target contract by the blockchain transaction from the remaining deductible gas fee of the target contract, and execute the call to the target contract by the blockchain transaction.

Optionally, the blockchain transaction includes a transaction identifier; and a prerequisite for deducting at least the part of contract gas fee from the remaining deductible gas fee of the target contract includes: the transaction identifier indicates that the blockchain transaction supports gas fee deduction; or the target contract has a corresponding contract identifier; and a prerequisite for deducting at least the part of contract gas fee from the remaining deductible gas fee of the target contract includes: the contract identifier indicates that the target contract supports gas fee deduction; or the blockchain transaction includes a transaction identifier and the target contract has a corresponding contract identifier; and a prerequisite for deducting at least the part of contract gas fee from the remaining deductible gas fee of the target contract includes: the transaction identifier indicates that the blockchain transaction supports gas fee deduction, and the contract identifier indicates that the target contract supports gas fee deduction.

Optionally, the associated pledge account is the initiator account of the blockchain transaction or another account different from the initiator account.

Optionally, the deduction permission description information includes at least one of an account set with deduction permission, an account set without deduction permission, feature description information of an account with deduction permission, and feature description information of an account without deduction permission.

Optionally, the deduction permission description information and the remaining deductible gas fee are maintained in a contract account of the target contract or an associated party account recorded in the contract account of the target contract.

Optionally, the associated party account includes at least one of a contract deployer and a contract manager.

Optionally, the deduction permission description information is maintained in a storage field of the contract account of the target contract and the remaining deductible gas fee is maintained in an account balance field and/or the storage field of the contract account of the target contract when the deduction permission description information and the remaining deductible gas fee are maintained in the contract account of the target contract; or the deduction permission description information and the remaining deductible gas fee are maintained in a storage field of the associated party account when the deduction permission description information and the remaining deductible gas fee are maintained in the associated party account.

Optionally, the target contract has corresponding multiple groups of remaining deductible gas fees and deduction permission description information corresponding to each group of remaining deductible gas fees, and the deduction unit 604 is specifically configured to: deduct at least the part of contract gas fee from at least one group of the multiple groups of remaining deductible gas fees.

Optionally, the deduction unit 604 is specifically configured to determine each group of remaining deductible gas fees for which the initiator account of the blockchain transaction has deduction permission; and select the at least two groups of remaining deductible gas fees and deduct at least the part of contract gas fee from the at least two groups of remaining deductible gas fees when each group of remaining deductible gas fees or a fee allowed to be used by the initiator account of the blockchain transaction in each group of remaining deductible gas fees is less than at least the part of contract gas fee.

Optionally, the deduction unit 604 is specifically configured to deduct an entire contract gas fee needed for calling the target contract by the blockchain transaction from the remaining deductible gas fee of the target contract; or deduct a part of contract gas fee needed for calling the target contract by the blockchain transaction from the remaining deductible gas fee of the target contract, and deduct a remaining part of contract gas fee from an account balance of the initiator account of the blockchain transaction.

Optionally, the deduction unit 604 is specifically configured to: when the remaining deductible gas fee of the target contract is less than the contract gas fee, deduct the remaining deductible gas fee of the target contract, and deduct the remaining part of contract gas fee from the account balance of the initiator account; or deduct the contract gas fee from the remaining deductible gas fee of the target contract and the account balance of the initiator account by a predefined ratio.

Optionally, the apparatus further includes: a second determining unit 606, configured to determine whether the target contract has a corresponding deduction permission identifier; and a third determining unit 608, configured to: when it is determined that the target contract has the deduction permission identifier, determine, based on the deduction permission description information, whether the initiator account of the blockchain transaction has deduction permission.

Optionally, the apparatus further includes: a fourth determining unit 610, configured to: in response to a gas fee pledge transaction for the target contract, determine an associated pledge account and a pledged gas fee that are described in the gas fee pledge transaction; and an adding unit 612, configured to deduct the pledged gas fee from an account balance of the determined associated pledge account, and add the pledged gas fee to the remaining deductible gas fee of the target contract.

Optionally, the apparatus further includes an allocation unit 614, configured to allocate an incentive resource to the associated pledge account in response to the contract gas fee deducted from the remaining deductible gas fee based on the blockchain transaction.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers obtain the corresponding hardware circuit structure by programming the improved method process into the hardware circuit. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be in a form of a microprocessor or a processor, a computer-readable medium that stores computer-readable program code (such as software or firmware) that can be executed by the microprocessor or the processor, a logic gate, a switch, an application-specific integrated circuit (ASIC), a programmable logic controller, or an embedded microcontroller. Examples of the controller include but are not limited to the following microcontrollers: ARC 625D, Atmel AT91SAM, Microchip PIC18F26K20, and Silicone Labs C8051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware component, and an apparatus that is configured to implement various functions and that is included in the controller can also be considered as a structure in the hardware component. Alternatively, the apparatus configured to implement various functions can even be considered as both a software module implementing a method and a structure in the hardware component.

The system, apparatus, module, or unit described in the above-mentioned implementations can be specifically implemented by a computer chip or an entity, or can be implemented by a product having a certain function. A typical implementation device is a server system. Certainly, this application does not exclude that with development of future computer technologies, a computer that implements a function in the above-mentioned implementations can be, for example, a personal computer, a laptop computer, a vehicle-mounted man-machine interaction device, a cellular phone, a camera phone, a smartphone, a personal digital assistant, a media player, a navigation device, an e-mail device, a game console, a tablet computer, a wearable device, or a combination of any of these devices.

Although one or more implementations of this specification provide method operating steps as described in the implementations or a flowchart, more or fewer operating steps can be included on the basis of conventional or noncreative means. A sequence of steps listed in the implementations is merely one of various step execution sequences and does not indicate a sole execution sequence. In practice, when being executed by an apparatus or an end-user device product, the steps can be performed sequentially or in parallel (for example, by parallel processors or in a multi-thread processing environment, or even in a distributed data processing environment) based on the method shown in the implementations or the accompanying drawings. The terms "include", "comprise", or any other variants thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, the existence of additional identical or equivalent elements in the process, method, product, or device that includes the elements is not excluded. For example, if the words first, second, etc. are used for indicating names, they do not indicate any particular order.

For ease of description, the above-mentioned apparatus is described by dividing functions into various modules. Certainly, during implementation of one or more implementations of this specification, the functions of the modules can be implemented in same one or more pieces of software and/or hardware, or modules implementing the same function can be implemented by using a combination of a plurality of sub-modules or sub-units, etc. The described apparatus implementations are merely examples. For example, division into the units is merely logical function division and there can be other division methods in actual implementation. For example, a plurality of units or components can be combined or integrated into another system, or some features can be ignored or not performed. In addition, the displayed or discussed mutual couplings or direct couplings or communication connections can be implemented by using some interfaces. The indirect couplings or communication connections between the apparatuses or units can be implemented in electronic, mechanical, or other forms.

This application is described with reference to a flowchart and/or a block diagram of a method, an apparatus (system), and a computer program product according to some implementations of this application. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more processes in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more central processing units (CPU), input/output interfaces, network interfaces, and memories.

The memory can include a non-persistent memory, a random access memory (RAM), a non-volatile memory, and/or another form in a computer-readable medium, for example, a read-only memory (ROM) or a flash random access memory (flash RAM). The memory is an example of the computer-readable medium.

The computer-readable medium includes persistent, non-persistent, removable, and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. As described in this specification, the computer-readable medium does not include computer-readable transitory media such as a modulated data signal and a carrier.

A person skilled in the art should understand that one or more implementations of this specification can be provided as methods, systems, or computer program products. Therefore, the one or more implementations of this specification can use a form of hardware only implementations, software only implementations, or implementations with a combination of software and hardware. Moreover, the one or more implementations of this specification can use the form of a computer program product implemented on one or more computer readable storage media (including, but not limited to, disk storage, CD-ROM, optical memory, etc.), where the computer readable program code is included.

The one or more implementations of this specification can be described in common contexts of computer-executable instructions executed by a computer, such as a program module. Generally, the program module includes a routine, a program, an object, a component, a data structure, etc. executing a specific task or implementing a specific abstract data type. The one or more implementations of this specification can also be practiced in a distributed computing environment where tasks are performed by remote processing devices that are connected through a communication network. In the distributed computing environment, the program module can be located in both local and remote computer storage media including storage devices.

The implementations in this specification are described in a progressive manner. For same or similar parts in the implementations, references can be made to each other. Each implementation focuses on a difference from other implementations. In particular, the system implementations are basically similar to the method implementations, and are described simply. For related parts, references can be made to the descriptions in the method implementations. In the description of this specification, references to term "an implementation", "some implementations", "examples", "specific examples", or "some examples" mean that specific features, structures, materials, or characteristics described in conjunction with this implementation or example are included in at least one implementation or example of this specification. In this specification, it is unnecessary for the exemplary representation of the above-mentioned terms to refer to the same implementation or example. Moreover, the specific features, structures, materials, or characteristics described can be combined in any one or more implementations or examples in a suitable method. In addition, without contradicting each other, a person skilled in the art can combine and integrate different implementations or examples described in this specification and features of the different implementations or examples.

The above-mentioned descriptions are merely implementations of the one or more implementations of this specification, and are not intended to limit the one or more implementations of this specification. A person skilled in the art knows that one or more implementations of this specification can have various modifications and changes. Any modifications, equivalent replacements, improvements, etc. made without departing from the spirit and principle of this specification shall fall within the scope of the claims.

## Claims

1. A smart contract calling method, wherein the method comprises:
in response to an obtained blockchain transaction, determining a target contract that the blockchain transaction instructs to call, wherein the target contract maintains a remaining deductible gas fee previously pledged by an associated pledge account, and the remaining deductible gas fee has corresponding deduction permission description information; and
when it is determined, based on the deduction permission description information, that an initiator account of the blockchain transaction has deduction permission, deducting at least a part of a contract gas fee needed for calling the target contract by the blockchain transaction from the remaining deductible gas fee of the target contract, and executing the call to the target contract by the blockchain transaction.

2. The method according to claim 1, wherein
the blockchain transaction comprises a transaction identifier; and a prerequisite for deducting at least the part of contract gas fee from the remaining deductible gas fee of the target contract comprises: the transaction identifier indicates that the blockchain transaction supports gas fee deduction; or
the target contract has a corresponding contract identifier; and a prerequisite for deducting at least the part of contract gas fee from the remaining deductible gas fee of the target contract comprises: the contract identifier indicates that the target contract supports gas fee deduction; or
the blockchain transaction comprises a transaction identifier and the target contract has a corresponding contract identifier; and a prerequisite for deducting at least the part of contract gas fee from the remaining deductible gas fee of the target contract comprises: the transaction identifier indicates that the blockchain transaction supports gas fee deduction, and the contract identifier indicates that the target contract supports gas fee deduction.

3. The method according to claim 1, wherein the associated pledge account is the initiator account of the blockchain transaction or another account different from the initiator account.

4. The method according to claim 1, wherein the deduction permission description information comprises at least one of an account set with deduction permission, an account set without deduction permission, feature description information of an account with deduction permission, and feature description information of an account without deduction permission.

5. The method according to claim 1, wherein the deduction permission description information and the remaining deductible gas fee are maintained in a contract account of the target contract or an associated party account recorded in the contract account of the target contract.

6. The method according to claim 5, wherein the associated party account comprises at least one of a contract deployer and a contract manager.

7. The method according to claim 5, wherein
the deduction permission description information is maintained in a storage field of the contract account of the target contract and the remaining deductible gas fee is maintained in an account balance field and/or the storage field of the contract account of the target contract when the deduction permission description information and the remaining deductible gas fee are maintained in the contract account of the target contract; or
the deduction permission description information and the remaining deductible gas fee are maintained in a storage field of the associated party account when the deduction permission description information and the remaining deductible gas fee are maintained in the associated party account.

8. The method according to claim 1, wherein the target contract has corresponding multiple groups of remaining deductible gas fees and deduction permission description information corresponding to each group of remaining deductible gas fees, and the deducting at least the part of contract gas fee needed for calling the target contract by the blockchain transaction from the remaining deductible gas fee of the target contract comprises:
deducting at least the part of contract gas fee from at least one group of the multiple groups of remaining deductible gas fees.

9. The method according to claim 8, wherein the deducting at least the part of contract gas fee from the at least two groups of remaining deductible gas fees comprises:
determining each group of remaining deductible gas fees for which the initiator account of the blockchain transaction has deduction permission; and
selecting the at least two groups of remaining deductible gas fees and deducting at least the part of contract gas fee from the at least two groups of remaining deductible gas fees when each group of remaining deductible gas fees or a fee allowed to be used by the initiator account of the blockchain transaction in each group of remaining deductible gas fees is less than at least the part of contract gas fee.

10. The method according to claim 1, wherein the deducting at least the part of contract gas fee needed for calling the target contract by the blockchain transaction from the remaining deductible gas fee of the target contract comprises:
deducting an entire contract gas fee needed for calling the target contract by the blockchain transaction from the remaining deductible gas fee of the target contract; or
deducting a part of contract gas fee needed for calling the target contract by the blockchain transaction from the remaining deductible gas fee of the target contract, and deducting a remaining part of contract gas fee from an account balance of the initiator account of the blockchain transaction.

11. The method according to claim 10, wherein the deducting the part of contract gas fee needed for calling the target contract by the blockchain transaction from the remaining deductible gas fee of the target contract, and deducting the remaining part of contract gas fee from the account balance of the initiator account of the blockchain transaction comprises:
when the remaining deductible gas fee of the target contract is less than the contract gas fee, deducting the remaining deductible gas fee of the target contract, and deducting the remaining part of contract gas fee from the account balance of the initiator account; or deducting the contract gas fee from the remaining deductible gas fee of the target contract and the account balance of the initiator account by a predefined ratio.

12. The method according to claim 1, wherein the method further comprises:
determining whether the target contract has a corresponding deduction permission identifier; and
when it is determined that the target contract has the deduction permission identifier, determining, based on the deduction permission description information, whether the initiator account of the blockchain transaction has deduction permission.

13. The method according to claim 1, wherein the method further comprises:
in response to a gas fee pledge transaction for the target contract, determining an associated pledge account and a pledged gas fee that are described in the gas fee pledge transaction; and
deducting the pledged gas fee from an account balance of the determined associated pledge account, and adding the pledged gas fee to the remaining deductible gas fee of the target contract.

14. The method according to claim 1, wherein the method further comprises:
allocating an incentive resource to the associated pledge account in response to the contract gas fee deducted from the remaining deductible gas fee based on the blockchain transaction.

15. A smart contract calling apparatus, wherein the apparatus comprises:
a determining unit, configured to: in response to an obtained blockchain transaction, determine a target contract that the blockchain transaction instructs to call, wherein the target contract maintains a remaining deductible gas fee previously pledged by an associated pledge account, and the remaining deductible gas fee has corresponding deduction permission description information; and
a deduction unit, configured to: when it is determined, based on the deduction permission description information, that an initiator account of the blockchain transaction has deduction permission, deduct at least a part of a contract gas fee needed for calling the target contract by the blockchain transaction from the remaining deductible gas fee of the target contract, and execute the call to the target contract by the blockchain transaction.

16. An electronic device, comprising:
a processor; and
a storage, configured to store instructions executable by the processor, wherein
the processor runs the executable instructions to implement the method according to any one of claims 1 to 14.

17. A computer-readable storage medium, wherein the computer-readable storage medium stores computer instructions, and when the instructions are executed by a processor, the steps of the method according to any one of claims 1 to 14 is implemented.
